Europäisches Patentamt

European Patent Office

Office européen des brevets

(11) Publication number: 0 498 345 A2

# EUROPEAN PATENT APPLICATION

(21) Application number: 92101728.1

(51) Int. Cl.5: B23D 31/00

(22) Date of filing: 03.02.92

(30) Priority: 08.02.91 JP 18011/91

(43) Date of publication of application:
12.08.92 Bulletin 92/33

(84) Designated Contracting States:
DE FR GB IT

(71) Applicant: Iwazumi, Yukio
15-11, Yamaashiyacho
Ashiya-shi, Hyogo-ken(JP)

(72) Inventor: Iwazumi, Yukio
15-11, Yamaashiyacho
Ashiya-shi, Hyogo-ken(JP)

(74) Representative: Patentanwälte Deufel, Hertel,
Lewald
Postfach 26 02 47 Isartorplatz 6
W-8000 München 26(DE)

(54) A method and system for producing workpieces from a metal sheet.

(57) A system for producing workpieces from a metal sheet includes an information generator device for generating arrangement information and machining information based on contour data of the workpieces and data on a portion to be machined within each workpiece, the arrangement information representing arrangement of the workpieces within the metal sheet and the machining information representing the portion within each workpiece, and a machining device in responsive to the information generator device for machining the metal sheet in accordance with the arrangement information and machining information,

an automatic unloading device for automatically unloading the machined metal sheet from the machining device, and a cutting device in responsive to the information generator device for cutting the machined metal sheet to separate the workpieces from one another.

FIG. 2

EP 0 498 345 A2

## BACKGROUND OF THE INVENTION AND RELATED ART STATEMENT

This invention relates to a workpiece producing system in which nesting information obtained from already inputted contour data of workpieces is sent to a machining apparatus and a cutting apparatus, and a metal sheet is machined and cut respectively by the machining apparatus and the cutting apparatus based on the nesting information, and more particularly to a workpiece producing system in which the metal sheet is cut by a cutting apparatus such as a shearing apparatus, so as to separate each workpiece from adjacent ones.

There have been conventionally required a variety of workpieces in various industrial fields. The demand for those products have been and will be on the increase. In view of this, there exists a growing need for a workpiece producing system used in a more flexible manner so as to improve production efficiency and meet the growing needs.

A main apparatus for machining the metal sheet may be represented by a punch pressing apparatus. For example, the punch pressing apparatus applies machining to the metal sheet in a specified position thereof which is designated based on nesting information. The nesting information is obtained with use of nesting and computerized designing in accordance with data such as inputted sizes of workpieces. Unnecessary portions within each workpiece are punched out, and discharged as scrap into a scrap chute. Further, contours of workpieces are nested with adjacent workpieces being spaced from one another by a distance equal to a diameter of a cutting tool of the punch pressing apparatus. The sheet metal is cut along the contours of workpieces to separate the workpieces from one another. The metal sheet in use has such a size that a designed arrangement of workpieces to be obtained from the metal sheet with the use of nesting can be at least completely accommodated therein, and an outer frame is left as remainder frame. The workpieces and remainder frame thus separably cut remain on a press table of the punch pressing apparatus in the same arrangement as the one designed by the nesting. It has been a usual practice that, after the machining operation, a worker sorts the workpieces according to the type thereof and stores each group of sorted workpieces, and further collects the remainder frame to be disposed.

There have been proposed a punch pressing apparatus additionally provided with an automatic loading device and an automatic unloading device so as to reduce burdens on the worker and promote further automation. The automatic loading and unloading devices carry suction device or the like device, and basically have a construction similar to the existing ones. The automatic loading device automatically transports the metal sheet of a specified size to the punch pressing apparatus while holding it with the use of the suction device or the like. On the other hand, the automatic unloading device transports the machined metal sheet to a specified position outside the punch pressing apparatus with the use of the suction device or the like.

Further, there has been known a shearing apparatus including a cutting blade and graduated slide rails, each rail having a pin for pressing the metal sheet toward the cutting blade. In the shearing apparatus, a metal sheet is placed on the graduated slide rails and engaged with the pins of the rails. By moving the graduated slide rails, the metal sheet is successively fed by a predetermined distance while being cut by the cutting blade of the shearing apparatus in each feed.

In the punch pressing apparatus provided with the automatic loading and unloading devices, the remainder frame is tightly held by an secondary automatic unloading device and transported, for example, back to the loading location and then up to a stacking pallet. On the other hand, the relatively large-sized workpieces are transported to an unloading location by the automatic unloading device. However, other workpieces, i.e., medium- and small-sized workpieces still remain on the press table. Accordingly, it has been required that the worker sort and store these medium- and small-sized workpieces similarly to the conventional working manner. Particularly, there is high possibility of producing even smaller-sized workpieces in the case where all the necessary machining is performed by the punch pressing apparatus. Thus, the number of workpieces which can be unloaded by the automatic unloading device is reduced all the better for it, and thereby exerting more burdens on the side of the worker in terms of sorting and storing the workpieces. The feature of the automatic unloading device cannot be sufficiently utilized and the downtime thereof cannot be minimized. Also, the next metal sheet to be machined cannot be automatically loaded. Accordingly, there is almost no hope for an improvement in efficiency of the automatic production of workpieces.

The efficiency of the automatic unloading device may be improved to some degrees by sophisticating and complicating the construction (the number of suction devices, and shape, etc.), feature and software of the automatic unloading device. However, it is extremely difficult to construct a perfectly automatic unloading device with zero downtime. Further, this will result in construction of a larger-sized automatic unloading device at higher costs. Such a device is not practical in use.

In the case where the workpieces are cut out of the metal sheet by the punch pressing apparatus, it is necessary to arrange workpieces in the metal sheet with spaced apart from adjacent ones by a distance equal to a diameter of a cutting tool. This presents a limitation in reduction of a scrap-to-workpieces ratio of the metal sheet, and is not desirable in respect of cost efficiency of the products.

Moreover, in order to automatically unload the remainder frame by holding it tightly and reliably in consideration of rigidity and construction thereof, an outer frame of the remainder frame is required to have the sufficient width. More specifically, a ratio of scrap-to-workpieces obtainable from the same metal sheet is compelled to lie in a range between 25 and 30 percent. This is one of factors hindering the production costs of the workpieces from being reduced.

On the other hand, it can be considered that the metal sheet is machined with the use of a shearing apparatus in addition to the punch pressing apparatus. However, in this case, all the factors should be comprehensively reviewed such as how much machining to be done by each of the punch pressing apparatus and the shearing apparatus and how much work the worker should do. Further, the metal sheet generally has a permissible size error, and therefore all the metal sheets may not be accurately sized. Moreover, it is hard to say that the metal sheet is held with the uniform grip in the punch pressing apparatus in each machining operation. Accordingly, it is necessary that the punched metal sheet and shearing positions are in accurate alignment with each other. This requires excess work for this operation. In addition, it is exceedingly difficult to improve production efficiency in view of attaining precision of the workpieces.

SUMMARY OF THE INVENTION

It is an object of the present invention to provide a workpiece producing method and system which can overcome the foregoing problems of the prior art.

According to the invention, a method for producing workpieces from a metal sheet comprising the steps of producing arrangement information and machining information based on contour data of the workpieces and data on a portion to be machined within each workpiece, the arrangement information representing arrangement of the workpieces within the metal sheet and the machining information representing the portion within each workpiece, setting the metal sheet at a machining location,
machining the metal sheet in accordance with the arrangement information and machining information at the machining location, transporting the machined metal sheet to a separating position from the machining location, and cutting the machined metal sheet in accordance with the arrangement information at the separating location to separate the workpieces from one another.

In this method, nesting and computerized designing are performed based on the contour data of workpieces to be obtained from the metal sheet and a portion to be machined within each workpiece, whereby the arrangement information and machining information are obtained. The arrangement information is used for cutting the machined metal sheet in the separating location, and the machining information and arrangement information are used for machining the metal sheet in the machining location.

When the metal sheet is properly positioned at the machining location, the machining operation is executed in accordance with the machining information and arrangement information. The machined metal sheet, in which a number of workpieces are arranged, is cut in the separating location so as to separate each workpiece from adjacent ones in accordance with the arrangement information used in the machining means. There can be eliminated the need for preparing nesting for the separation of the workpieces specially. Accordingly, workpieces can be produced at a reduced cost.

Also, when the machined metal sheet is transported from the machining location to the separating location, the workpieces arranged in the machined metal sheet is connected to one another. Consequently, the transfer or unloading of the metal sheet from the machining location can be automatically accomplished without use of a complicated expensive device. In other words, the manual operation which conventional methods require can be eliminated. Accordingly, workpieces can be produced at higher efficiency and lower costs.

According to the invention, also, a system for producing workpieces from a metal sheet comprises information generator means for generating arrangement information and machining information based on contour data of the workpieces and data on a portion to be machined within each workpiece, the arrangement information representing arrangement of the workpieces within the metal sheet and the machining information representing the portion within each workpiece, machining means in responsive to the information generator means for machining the metal sheet in accordance with the arrangement information and machining information, automatic unloading means for automatically unloading the machined metal sheet from the machining means, and cutting means in responsive to the information generator means for cutting the machined metal sheet in accordance with the arrangement information to separate the workpieces from one another.

In this construction, the metal sheet is machined by the machining means in accordance with the arrangement and machining information generated in the information generator means. The workpieces arranged in the machined metal sheet are separated from one another by the cutting means in accordance with the arrangement information used in the machining means. Accordingly, there can be eliminated the need for preparing nesting for the separation of the workpieces specially. Thus, workpieces can be produced at lower costs. Also, the machined metal sheet is unloaded from the machining means with the automatic unloading means, which consequently increases the production efficiency.

Further, the system is further provided with automatic loading means for automatically loading the metal sheet to be machined on the machining means.

With this construction, the production rate of workpieces are more increased.

Further, the unloading means includes a first automatic unloading device for unloading the machined metal sheet having large-sized workpieces, and a second automatic unloading device for unloading the machined metal sheet having small-sized workpieces.

With this construction, the automatic unloading of the machined metal sheet can be executed more efficiently.

Further, the machining means includes a marking device for providing a reference mark in an appropriate position of the metal sheet outside an area where the workpieces are arranged, the reference mark being indicative of the reference for the arrangement information. Preferably, the reference mark may have a recessed portion.

With this construction, the workpieces can be separated more accurately because the cutting is performed on the basis of the reference mark.

The above and other objects, features and advantages of the present invention will become more apparent upon a reading of the following detailed description and drawings.

BRIEF DESCRIPTION OF THE DRAWINGS

Fig. 1 is a block diagram showing a construction of a system of the invention for producing workpieces from a metal sheet;
Fig. 2 is a perspective view of the workpiece producing system except a shearing apparatus;
Fig. 3A is a front view of the shearing apparatus used in the workpiece producing system;
Fig. 3B is a sectional view taken along the line A-A in Fig. 3A;
Fig. 4 is a diagram showing an example of nesting: and
Fig. 5 is a flow chart of operations executed in the workpiece producing system.

DETAILED DESCRIPTION OF PREFERRED EMBODIMENTS OF THE INVENTION

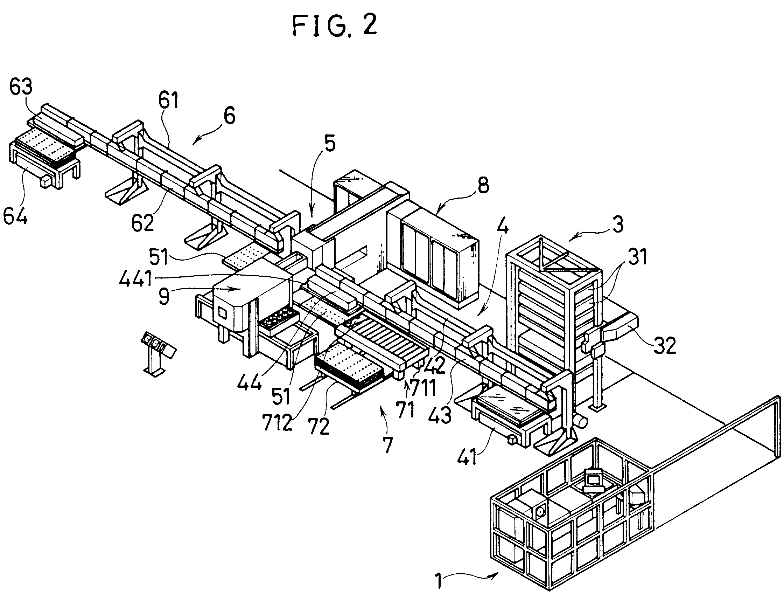

Fig. 2 is a perspective view of a workpiece producing system of the invention except a shearing apparatus. Indicated at 1 is a control unit, at 3 a stocking rack, at 4 an automatic loading device, at 5 a machining apparatus, at 6 an automatic unloading device, at 7 a secondary automatic unloading device, at 8 a sequence control unit, and at 9 a tool exchanger unit.

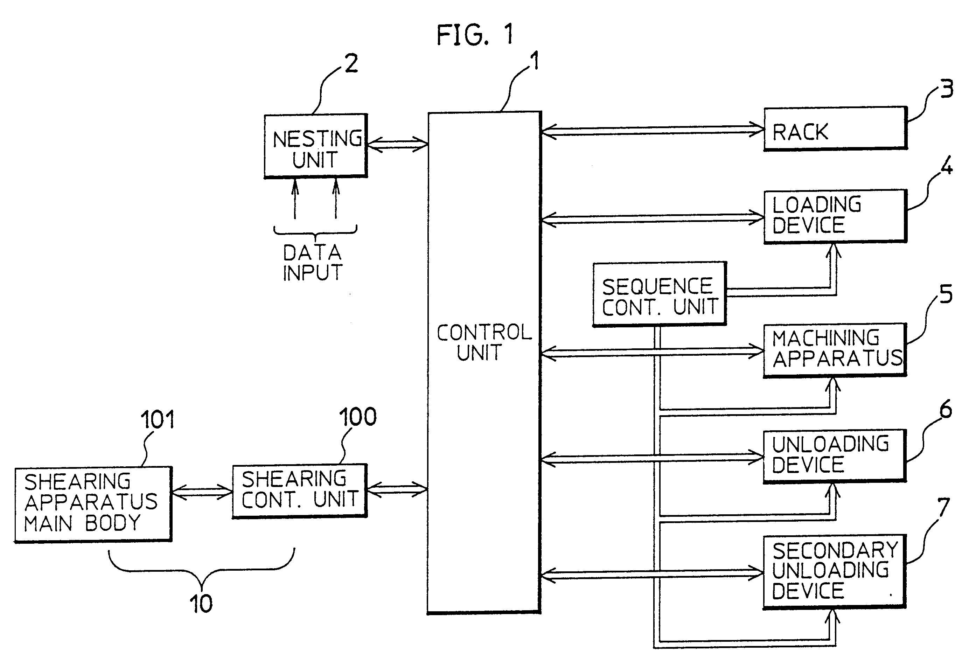

The control unit 1 centrally controls an overall sheet metal machining system, and installed in a control room. In the control room is also installed an unillustrated nesting unit 2 (see Fig. 1.) The control room may be placed in proximity to the sheet metal machining system in the same room, or may be placed in a separate room. Further, a remote control may be effected by transmission means using an optical-fiber cable or the like.

The stocking rack 3 carries a plurality of shelves 31 and a pallet loading/unloading device 32 movable upward and downward between an uppermost shelf and a bottommost shelf. On each shelf 31 is placed a pallet on which metal sheets of a specified type are stacked, and metal sheets stacked on one pallet are different in size, thickness and material from those stacked on other pallets. Upon the type of the metal sheet to be machined being instructed to the stocking rack 3 by the control unit 1 (see Fig. 1) to be described later, the pallet loading/unloading device 32 takes the pallet having metal sheets of the instructed type stacked thereon out of the specified shelf 31, and transports the same to a stacking table 41 of the automatic loading device 4. In the case where the control unit 1 instructs the metal sheet whose type is different from the one placed on the stacking table 41, the pallet on the stacking table 41 is transported back to the shelf where the pallet is previously placed, and thereafter another pallet having newly instructed metal sheets stacked thereon is unloaded from the rack 3.

The automatic loading device 4 transports the metal sheets unloaded from the stacking rack 3 by the pallet loading/unloading device 32 to the machining apparatus 5. The automatic loading device 4 comprises the stacking table 41, a frame member 42, a guide track 43, and a carriage 44. The frame member 42 extends horizontally and supports the guide track 43 in the extending direction thereof. The guide track 43 is arranged in such a manner that a base end thereof is located right above the stacking table 41 and a leading end thereof is located in a specified position above a machining table 51. The carriage 44 is supported on the guide track 43 reciprocatingly movable therealong. The carriage 44 has at a bottom thereof a suction pad frame 441 supported thereby movably upward and downward. A plurality of suction pads (not shown) are arranged in a specified number of positions on a lower surface of the suction pad frame 441. When the suction pad frame 441 moves downward, the suction pads of the frame 44 suck the uppermost metal sheet unloaded on the stacking table 41, and then moves upward while lifting the sucked metal sheet upward. The frame 441 moves to the specified position above the machining table 51 in this state, along with movement of the carriage 44 thereto. Upon reaching the specified position above the machining table 51, the frame 441 moves downward and whereupon the suction of the suction pads is released. Thereafter, the carriage 44 returns to the initial position thereof above the stacking table 41, whereby one metal sheet loading operation is completed and the automatic loading device 4 waits in a standby state for a next metal sheet loading operation.

The machining apparatus 5 applies machining to the metal sheet loaded on the machining table 51, similarly to the existing machining apparatus. The machining apparatus 5 may be a punch pressing apparatus, a laser cutting apparatus or like apparatus. The machining apparatus 5 comprises a grip portion for gripping a tool to machine the metal sheet, a plurality of holders for tightly holding one lateral side (a lateral side closest to and along the guide track 43) of the metal sheet placed on an upper surface of the machining table 51, an X-axis moving mechanism, and a Y-axis moving mechanism. The X-axis moving mechanism enables only the holders to move in a metal sheet loading/unloading direction. The Y-axis moving mechanism enables the machining table 51, together with the holders, in a direction perpendicular to the loading/unloading direction.

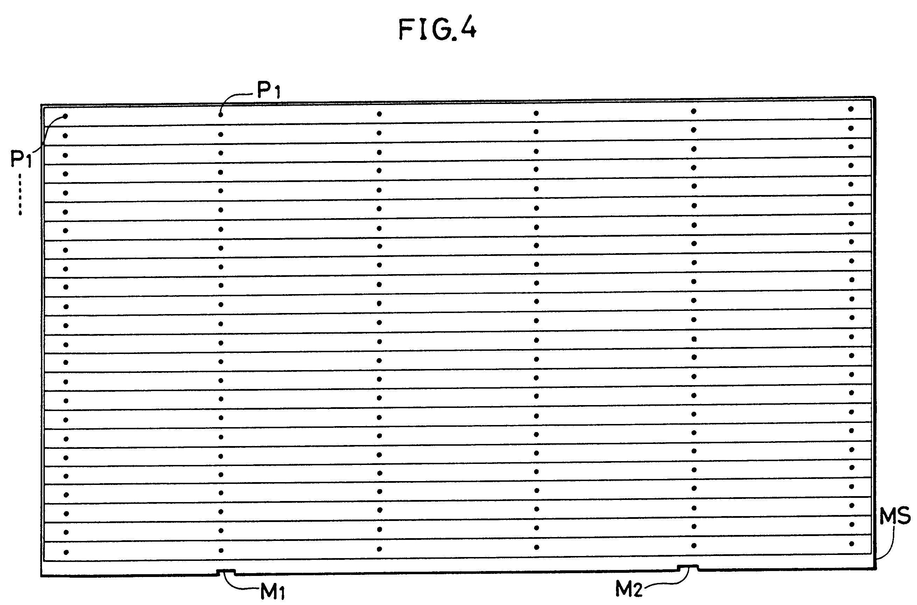

The metal sheet loaded in a specified position on the machining table 51 by the automatic loading device 4 has the one lateral side thereof tightly held by the plurality of holders, and moved and set in a desired position on the machining table 51. Positions to apply machining to the metal sheet are determined in advance based on the nesting and the computerized designing in accordance with already inputted sizes of various workpieces. The metal sheet is moved to the determined positions sequentially by the X-axis and Y-axis moving mechanisms. More specifically, the nesting unit 2 (see Fig. 1) performs computerized designing so as to obtain arrangement information and machining information of workpieces based on the inputted contour data of the workpieces and data concerning portions within each workpiece which are to be cut out. The nesting information, i.e., arrangement information and machining information, is inputted to the control unit 1. Fig. 4 shows an example of the nested arrangement of the workpieces reflecting information on cut-out portions P1, P1, ... and reference marks M1, M2 to be described later for a metal sheet MS. It should be understood that the shape of the cut-out portions are not limited to one type.

Further, types of tools to be used at respective machining locations are instructed and set in advance by the control unit 1 and the sequence control unit 8. The tool is exchangeable to a tool of the other type, or to a tool selected from those of a plurality of types. The tool exchange is performed by the tool exchanger unit 9 automatically in an appropriate manner during the cut-out operation in the machining apparatus. In this way, unnecessary portions within each workpiece are cut off the metal sheet in the cut-out operation.

The machining apparatus is, preferably or according to needs, designed to form the reference marks M1, M2 for indicating a reference line representing at least one lateral side of the metal sheet in specified positions of the metal sheet outside an area where the workpieces are arranged. Information on the reference marks M1, M2 may be inputted to the control unit 1 when the nesting information is prepared according to needs. In this case, the aforementioned cut-out operation is performed on the basis of the reference marks M1, M2. This will facilitate positioning of the semi-machined metal sheet, i.e., the metal sheet having passed the cut-out operation, in the shearing operation after the cut-out operation for the following reasons. Metal sheets, serving as blanks, normally have a permissible size error, so not all the metal sheets are accurately sized. Further, the metal sheet may not be held by the holders of the machining apparatus uniformly in each operation. The way to form the reference marks may differ depending on the type of the machining apparatus 5. For example, two reference marks may be provided left and right, or fore and aft on one lateral side of the metal sheet by providing two cut-away portions as shown in Fig. 4. Further, holes may be formed to provide the reference marks. Moreover, the reference marks may be provided by forming projected portions or recessed portions on the metal sheet by punching the metal sheet only halfway. Furthermore, it may be appropriate to detect an angle made between the one side of the metal sheet used as reference and the transversely arranged workpieces, and store it as angular data.

The automatic unloading device 6 unloads the semi-machined metal sheet after the cut-out operation, for example, in a direction opposite from the direction in which the sheet metal is loaded by the loading device 4. The unloading device 6, basically having a construction identical to that of the loading device 4, comprises a frame member 61, guide track 62, carriage 63, and stacking table 64. The semi-machined metal sheet is unloaded by the unloading device 6, and transported to the stacking table 64 disposed downstream with respect to the unloading direction.

The secondary automatic unloading device 7 includes an unloading table 71 and a stacking pallet 72. The secondary automatic unloading device 7 is used to collect the remainder frames to be disposed. Also, the secondary automatic unloading device 7 is used to unload the semi-machined metal sheet according to the type of workpieces to be obtained from the metal sheet. Specifically, the unloading device 6 may be adapted for unloading the semi-machined metal sheet in the case where a number of workpieces are to be obtained therefrom while the secondary automatic unloading device 7 may be adapted for unloading the semi-machined metal sheet in the case where a few workpieces are to be obtained therefrom.

On an upper surface of the unloading table 71 is provided a roller conveyor 711 having a track of parallel tubular rollers set at a specified interval. The track of parallel tubular rollers is movable between an operative position and a retracted position below the machining table 51. At a leading end of the unloading table 71 is provided a gripper carriage 712 having grippers for gripping the remainder frame or semi-machined metal sheet, the gripper carriage 712 being movable reciprocatingly. The stacking pallet 72 is movable between a sheet receiving position below the unloading table 71 and a retracted position. The remainder frame or semi-machined metal sheet after the cut-out operation is unloaded by the gripper carriage 712 to an upper surface of the roller conveyor 711 while being held by the grippers. At this time, the stacking pallet 72 is in the operative position below the unloading table 71. In this state, the roller conveyor 711 moves to the retracted position and the gripping state of the grippers is released. Thereby, the unloaded remainder frame or semi-machined metal sheet falls onto the stacking pallet 72. In this way, the remainder frame or semi-machined metal sheets are successively stacked up on the stacking pallet 72. It is also possible to transport the semi-machined metal sheet to a next assembly for another operation each time it is unloaded from the machining apparatus 5. As described above, the unloading device 6 and secondary automatic unloading device 7 are designed to unload the semi-machined metal sheet from which only unnecessary portions within each workpiece are cut out and which is provided with the reference marks according to needs. Accordingly, unlike the conventional automatic unloading devices, it is not required that the semi-machined metal sheet have an outer frame of a sufficient width and rigidity in order to facilitate the unloading thereof. It is sufficient for the semi-machined metal sheet to have a narrowest possible outer frame which can be cut off by a shearing apparatus to be described later. Therefore, it is made possible to suppress the scrap-to-workpieces ratio to as low as 10 percent.

The sequence control unit 8 controls the sequence of operations performed in the cut-out operation in the machining apparatus 5. A variety of information required for the machining operation, such as arrangement information and machining information, are sent from the control unit 1 shown in Fig. 1 to the sequence control unit 8.

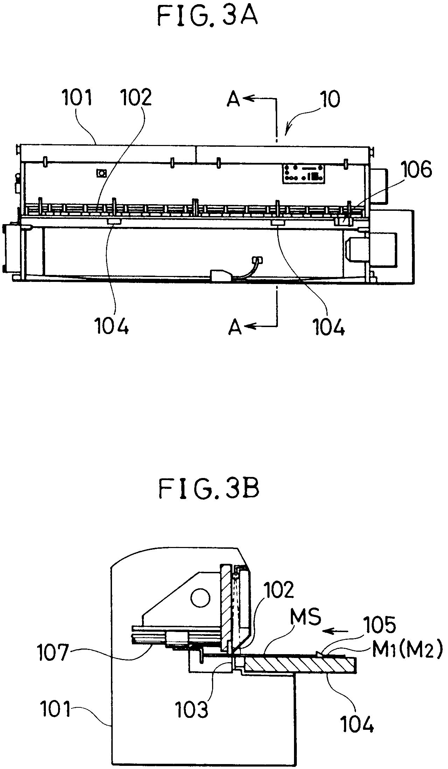

Figs. 3A, 3B are diagrams showing a construction of a shearing apparatus 10, Fig. 3A being a front view of the shearing apparatus 10 while Fig. 3B being a sectional view taken along the line A-A in Fig. 3A.

The shearing apparatus 10 comprises a shearing control unit 100 (see Fig. 1) and a main body 101. The apparatus main body 101 includes an internal upper cutting blade 102. a fixed lower cutting blade 103, and two front support members 104 for supporting the semi-machined metal sheet MS when the semi-machined metal sheet MS is fed toward the cutting blades, the front support member 104 extending forward of the cutting blades. The both cutting blades 102, 103 extend transversely. Indicated at 105 is a feed reference member provided movably on an upper portion of each front support member 104. Each feed reference member 105 may be in the form of protuberance which engages with the recessed reference mark in the semi-machined metal sheet MS. In the case where reference marks formed in the semi-machined metal sheet MS are, conversely, projected portions, the feed reference members 105 may be in the form of recess engageable with the projected reference marks.

Indicated at 106 is an edge guide member extending forward at the right side of the apparatus main body 101 for guiding the right side edge of the semi-machined metal sheet MS. The edge guide member 106 is at a right angle to the upper cutting blade 102 and adapted for maintaining the right side edge of the semi-machined metal sheet MS in contact therewith at a right angle to the upper cutting blade 102 while the semi-machined metal sheet MS being fed toward the cutting blades. Indicated at 107 are two back support members.

The cutting operation in the shearing apparatus 10 is performed as follows. The semi-machined metal sheet MS placed on the front support member 104 is fed by a predetermined distance, i.e., length of the transversely arranged workpieces in the sheet feeding direction, in accordance with the arrangement information, and feeding is temporarily stopped. Each time the semi-machined metal sheet MS is fed by the length of the workpieces, the upper cutting blade 102 is brought down to engagement with the fixed lower cutting blade 103, whereby the semi-machined metal sheet MS is cut. Subsequently, the semi-machined metal sheet MS is fed by the length of the workpieces again. In this way, the workpieces are cut in succession so as to separate each workpiece from adjacent ones.

In the case where the semi-machined metal sheet MS is provided with the reference marks M1, M2 at one side thereof, the reference marks M1, M2 are respectively engaged with the feed reference members 105 on the front support members 104. The semi-machined metal sheet MS is fed by the length of the workpieces using the positions of engagement as reference. Thereby, the shearing of the respective workpieces are performed accurately using the marks M1, M2 as reference. In the case where the semi-machined metal sheet MS is additionally provided with the reference marks at another side orthogonal to the above side, it is possible to cut the workpieces using the marks provided at another side as reference. In this case, it may be sufficient to provide only one reference mark at another side if the edge guide member 106 is effectively used.

Further, in the case where the angular data representing the angle made between the reference side of the semi-machined metal sheet MS and the transversely arranged workpieces is stored, one of the two transversely positioned feed reference members may be shifted either forward or backward by an amount corresponding to the angular data. This makes the semi-machined metal sheet MS placed on the front support members 104 incline by the above angle.

The present embodiment is described using the shearing apparatus as a cutting apparatus. However, the cutting apparatus is not limited to the shearing apparatus. For example, a gas fusing apparatus, water-jet cutter, laser cutter may also be used as a shearing apparatus.

The unloading device 6 and secondary automatic unloading device 7 may be connected to the shearing apparatus 10 by way of the stacking table 61. Alternatively, the unloading devices 6, 7 may be connected to the shearing apparatus 10 by providing a mechanism for transporting the stacking pallet 72.

Fig. 1 is a block diagram showing a construction of a system for carrying out the workpiece producing system according to the invention.

Indicated at 1 is a control unit for centrally controlling an overall workpiece producing system, and at 2 a nesting unit. Contour data and cut-out data of the workpieces to be obtained from the metal sheet are inputted to the nesting unit 2 by way of, for example, an unillustrated keyboard. Based on the inputted data is performed the computerized designing, whereby the machining information and the arrangement information of the workpieces are formed. Further, it is possible to input information on the reference marks, if necessary, based on which reference mark positional information representing positions where the reference marks are provided is formed.

The control unit 1 sends information on the type of metal sheet to be machined to the stocking rack 3, which in turn unloads the metal sheets one after another according to the received information. Each time the unloading of the metal sheets is completed, the stocking rack 3 sends an unloading end signal to the control unit 1. Upon receipt of the unloading end signal, the control unit 1 causes the automatic loading device 4 to transport the metal sheets stacked on the stacking table 41 to the machining apparatus 5. The machining apparatus 5 cuts the unnecessary portions within each workpiece out of the metal sheet based on the arrangement information and machining information from the control unit 1. Further, the reference marks may be formed in the metal sheet at this stage according to needs.

The automatic loading device 4, machining apparatus 5, automatic unloading device 6, and secondary automatic unloading device 7 are sequence-controlled by the sequence control unit 8. Each time one operation is completed, these devices are drivingly controlled to proceed to the next operation or step with the use of switches and sensors provided therein.

The shearing apparatus 10 is sequence-controlled by the shearing control unit 100, which sequentially sets the distance by which the semi-machined metal sheet is to be fed based on the arrangement information from the control unit 1.

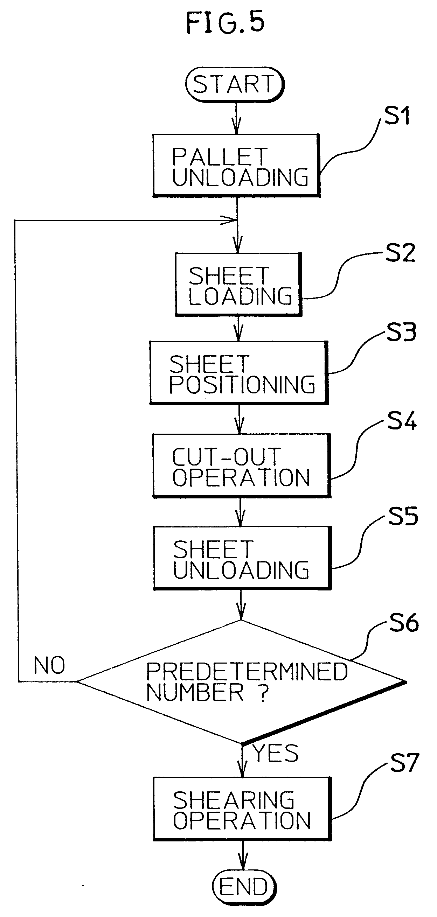

Next, there will be described each stage of the metal sheet machining process with reference to a flow chart shown in Fig. 5.

Upon the metal sheets of the specified type being instructed by the control unit 1, the stocking rack 3 causes the pallet loading/unloading device 32 to unload the pallet having the instructed metal sheets stacked thereon from the specified shelf 31 and transport the unloaded pallet to the stacking table 41 of the loading device 4 in Step S1. When the unloading of the pallet is completed, the driving of the loading device 4 is started, whereupon the uppermost metal sheet of those stacked on the unloaded pallet is sucked by the use of the suction pads provided on the lower surface of the suction pad frame 441 and transported to the specified position on the machining table 51 in Step S2.

The metal sheet transported to the specified position on the machining table 51 is set in a desired position on the table 51 with one lateral side thereof held by a plurality of holders provided in the machining apparatus 5 in Step S3.

The nesting unit 2 performs the computerized designing based on the contour data of the workpieces and data on the unnecessary portions within each workpiece to be cut out, whereby obtaining the arrangement information and machining information. The obtained information is inputted to the control unit 1. The control unit 1 reads the cut-out and arrangement information according to needs and executes the cut-out operation in Step S4. At this stage, if necessary, the machining apparatus 5 forms the reference marks M1, M2 indicative of at least one lateral side of reference line in appropriate positions of the metal sheet outside an area where the workpieces are arranged. The information on the reference marks is inputted when nesting is performed.

When the machining apparatus 5 completes the cut-out operation, the semi-machined metal sheet is unloaded by the unloading device 6 or secondary automatic unloading device 7 in Step S5. It is discriminated whether the number of unloaded semi-machined metal sheets has reached a predetermined number in Step S6. If not, this routine returns to Step S2. Upon the number of unloaded semi-machined metal sheets reaching a specified number (YES in Step S6), these semi-machined metal sheets are introduced to the next step, i.e., transported to the shearing apparatus 10 in Step S7. It may be also appropriate to transport the semi-machined metal sheets one by one to the shearing apparatus 10.

The semi-machined metal sheet placed on the front support member 104 is fed by the predetermined distance, i.e., length of the transversely arranged workpieces in the sheet feeding direction, in accordance with the arrangement information, and then feeding is temporarily stopped. Each time the metal sheet is fed by the length of the workpieces, the upper cutting blade 102 is brought down to engagement with the fixed lower cutting blade 103, whereby the metal sheet MS is cut transversely. Subsequently, the metal sheet is fed by the length of transversely arranged workpieces of the next row again, and cut in the similar manner. The workpieces are cut in succession to obtain the workpieces by repeating these operations.

In the case where the reference marks are provided in the semi-machined metal sheet, the reference marks are engaged with the respective feed reference members 105 on the front support member 104. The semi-machined metal sheet is fed by the length of the workpieces using the positions of engagement as reference.

Although the above-mentioned embodiment is described with reference to the forming of the cut-out portion within each workpiece, it should be noted that the present invention is applicable for other machining, for example, press-forming of a portion within each workpiece into a desired shape.

As described above, according to the invention, the portion within each workpiece are machined based on machining information and arrangement information by a machining apparatus. Then, in a shearing apparatus, the semi-machined metal sheet is fed in an appropriate fashion based on the arrangement information, thereby obtaining individually separated workpieces. Accordingly, automatic loading and unloading of the metal sheets can be controlled with maximum efficiency without addition of particularly complicated and large-sized facility. As a result, productivity can be improved.

Further, it is not required that the workpieces be arranged in the metal sheet with adjacent workpieces being spaced from one another by a distance equal to a diameter of a cutting tool of the machining apparatus. Nor is it required that an outer frame of the semi-machined metal sheet have sufficient width and rigidity in order to facilitate the unloading thereof. Accordingly, a scrap-to-workpieces ratio of the metal sheet can be reduced, which enables production of workpieces at lower costs.

Moreover, reference marks provided in the metal sheet are used as reference for positioning the metal sheet in the machining apparatus and shearing apparatus. Accordingly, the metal sheet can be machined accurately and quickly.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

**Claims**

1. A method for producing workpieces from a metal sheet comprising the steps of:

producing arrangement information and machining information based on contour data of the workpieces and data on a portion to be machined within each workpiece, the arrangement information representing arrangement of the workpieces within the metal sheet and the machining information representing the portion within each workpiece;

setting the metal sheet at a machining location;

machining the metal sheet in accordance with the arrangement information and machining information at the machining location;

transporting the machined metal sheet to a separating location from the machining location; and

cutting the machined metal sheet in accordance with the arrangement information at the separating location to separate the workpieces from one another.

2. A system for producing workpieces from a metal sheet comprising:

information generator means for generating arrangement information and machining information based on contour data of the workpieces and data on a portion to be machined within each workpiece, the arrangement information representing arrangement of the workpieces within the metal sheet and the machining information representing the portion within each workpiece;

machining means in responsive to the information generator means for machining the metal sheet in accordance with the arrangement information and machining information;

automatic unloading means for automatically unloading the machined metal sheet from the machining means; and

cutting means in responsive to the information generator means for cutting the machined metal sheet in accordance with the arrangement information to separate the workpieces from one another.

3. A system as defined in claim 2 further comprising automatic loading means for automatically loading the metal sheet to be machined on the machining means.

4. A system as defined in claim 2 wherein the unloading means includes a first automatic unloading device for unloading the machined metal sheet having large-sized workpieces, and a second automatic unloading device for unloading the machined metal sheet having small-sized workpieces.

5. A system as defined in claim 2 wherein the machining means includes a marking device for providing a reference mark in an appropriate position of the metal sheet outside an area where the workpieces are arranged, the reference mark being indicative of a reference for the arrangement information.

6. A system as defined in claim 5 wherein the reference mark has a recessed portion.

FIG. 1

FIG. 2

EP 0 498 345 A2

## FIG. 3A

## FIG. 3B

FIG.4

# FIG.5

START

S1 PALLET UNLOADING

S2 SHEET LOADING

S3 SHEET POSITIONING

S4 CUT-OUT OPERATION

S5 SHEET UNLOADING

S6 PREDETERMINED NUMBER ?

NO

YES

S7 SHEARING OPERATION

END